(19) Europäisches Patentamt
European Patent Office
Office européen des brevets

(11) **EP 1 533 108 B1**

(12) **EUROPEAN PATENT SPECIFICATION**

(45) Date of publication and mention
of the grant of the patent:
**26.09.2012 Bulletin 2012/39**

(51) Int Cl.:
***B29D 30/00*** *(2006.01)* ***B29C 73/22*** *(2006.01)*
***C09K 3/12*** *(2006.01)*

(21) Application number: **04105827.2**

(22) Date of filing: **17.11.2004**

(54) **Pneumatic tire with built-in colored sealant layer and method of preparing said pneumatic tire**

Luftreifen mit eingebauter gefärbter Dichtungsschicht und Verfahren zur Herstellung des Luftreifen

Pneumatique contenant une couche étanche colorée et méthode pour préparer ledit pneumatique

(84) Designated Contracting States:
**DE FR GB IT TR**

(30) Priority: **21.11.2003 US 524217 P**
**13.08.2004 US 917620**

(43) Date of publication of application:
**25.05.2005 Bulletin 2005/21**

(73) Proprietor: **The Goodyear Tire & Rubber Company**
**Akron, OH 44316-0001 (US)**

(72) Inventors:
• **Wall, Jennifer Elizabeth Fitzharris**
**Massillon, OH 44646 (US)**
• **Botts, Bina Patel**
**Cuyahoga Falls, OH 44223 (US)**

• **Balogh, George Frank**
**North Canton, OH 44720 (US)**
• **Reiter, Leonard James**
**Norton, OH 44203 (US)**
• **Crawford, Michael Julian**
**Akron, OH 44303 (US)**

(74) Representative: **Kutsch, Bernd**
**Goodyear S.A.,**
**Patent Department,**
**Avenue Gordon Smith**
**7750 Colmar-Berg (LU)**

(56) References cited:
**GB-A- 878 681** **US-A- 4 895 610**
**US-A1- 2003 155 058**

**Description**

Field of the Invention

The present invention relates to a pneumatic tire with a built-in sealant layer having a color other than black according to claim 1. The sealant layer is derived from a sealant precursor layer comprised of a butyl rubber, organoperoxide and silica together with a colorant. The butyl rubber-based precursor sealant layer is built into the tire to form a tire assembly and its butyl rubber component is depolymerized during a subsequent curing of the tire at an elevated temperature in a suitable mold to form the tire having the resultant built-in colored sealant layer. The sealant precursor composition may additionally contain clay and/or calcium carbonate.

Background of the Invention

Various pneumatic tires have been proposed which contain a built-in sealant layer based upon a depolymerized butyl rubber layer.

For example, in US-A- 4,895,610 it is proposed to build a layer of butyl rubber-based composition into a tire which contains a polyisobutylene polymer and an organoperoxide, following which under a conditions of elevated temperature used to cure the tire, a major portion of the butyl rubber is presented as being depolymerized to form a tacky material which has puncture sealant properties.

US-A- 4,228,839, 4,171,237 and 4,140,167 also relate to a sealant layer in a tire formed by depolymerizing and crosslinking a butyl rubber-based rubber composition, particularly by irradiation treatment.

US-A- 2003/0155058 describes a tire having a built-in non-black colored sealant layer comprising a colorant selected from organic pigments, inorganic pigments and dies. A further self-sealant pneumatic tire and a method of manufacturing such a tire is described in US-A- 4,895,610.

In one aspect, the various built-in sealant layers for the pneumatic tires which are derived from a depolymerization of a butyl rubber-based sealant precursor composition typically contain a rubber reinforcing carbon black filler and are therefore black in color.

For this invention, it is desired to provide a built-in sealant layer for a pneumatic tire which is derived from a depolymerization of a butyl rubber-based sealant precursor composition which is of a color other than black as an aid to identify a puncture wound in a carbon black reinforced innerliner, tread and/or sidewall of said tire, depending somewhat upon the position of the built-in sealant layer, because of its contrasting color. Therefore, it is envisioned that such a sealant layer does not contain (is exclusive of) carbon black and particularly a rubber reinforcing carbon black.

The presence of the rubber reinforcing carbon black is considered herein to normally be a significant component in both a butyl rubber-based sealant precursor composition and, also, in the resultant depolymerized butyl rubber-based sealant composition.

In particular, the presence of a relatively small amount of the rubber reinforcing carbon black in the butyl rubber-based sealant precursor composition is relied upon to provide a degree of reinforcement and thereby a suitable rubber viscosity to enable the sealant precursor composition to be conveniently processable both by formation into a suitable rubber sheet whether by extrusion or calendering and, also, by handling to build a sheet, or layer, of the sealant precursor composition into a tire assembly. Further, the rubber reinforcing carbon black is relied upon to provide a suitable viscosity of the built-in sealant in order to promote the stability of the sealant composition.

However, for this invention, synthetic, amorphous silica (aggregates of primary silica particles), preferably in the form of a precipitated silica, is used as a primary reinforcing filler for the butyl rubber-based sealant precursor composition instead of rubber reinforcing carbon black.

In another aspect of the invention, a portion of the silica may be replaced by clay, for example kaolin clay, and/or calcium carbonate. In practice, therefore, the butyl rubber-based sealant precursor may contain clay and/or calcium carbonate in addition to the amorphous silica.

However, the clay and calcium carbonate are not considered herein as being as effective reinforcing ingredients for the butyl rubber based rubber composition as the aforesaid silica. Accordingly, only a partial replacement of the silica with the clay and/or calcium carbonate is contemplated.

Significant challenges are presented in the replacement of carbon black with synthetic, amorphous silica, particularly precipitated silica as well as the clay and calcium carbonate.

For example, contrary to rubber reinforcing carbon black, such silica, particularly precipitated silica (precipitated silica aggregates of primary silica particles), normally contains a significant presence of water of hydration, and/or water of association on its surface as well as a significant presence of hydroxyl groups (e.g. silanol groups). The clay and calcium carbonate may also contain an associated water moiety.

While the mechanism may not be fully understood, it is envisioned that at least a portion of such water, and possibly a portion of such hydroxyl groups, is available to prematurely decompose the organoperoxide intended to be used to depolymerize the butyl rubber in the sealant precursor composition.

It is considered herein that such premature decomposition of the organoperoxide, whether by presence of the water of hydration and/or association or by the presence of the hydroxyl groups, may adversely affect the free radical generating activity of the organoperoxide for a timely depolymerization of the butyl rubber after the sealant precursor layer is built into the tire assembly and the tire is cured at an elevated temperature. Such prematurely formed free radicals may become associated with the silica, and possibly the clay and calcium carbonate, rather than be involved with the desired depolymerization of the butyl rubber. It is further envisioned that if excess organoperoxide is added to allow for such premature decomposition, a portion of such excess organoperoxide may later or otherwise gradually become available to interact with associated rubber layers of the tire assembly, or construction, adjacent to the built-in sealant.

In order to inhibit, retard and/or significantly prevent significant contact of such water moieties and hydroxyl groups of the amorphous silica aggregates with the organoperoxide, the synthetic amorphous silica may be treated in situ within the rubber composition prior to addition of the organoperoxide, or may be pre-treated prior to its addition to the rubber composition with a low molecular weight polyalkylene oxide polymer, which might sometimes be referred to as a polyalkylene glycol; with an alkylsilane, a coupling agent having a moiety reactive with the hydroxyl groups on the silica and another moiety which is normally interactive with carbon-to-carbon double bonds of an elastomer or by a combination of alkylsilane and coupling agent.

In another aspect of the practice of the invention, while the butyl rubber, as a copolymer of isobutylene and isoprene, may be composed of greater than one weight percent units derived from isoprene, it is preferred that it is composed of from only 0.5 to 1.0 weight percent units derived from isoprene. The use of a butyl rubber with such low unsaturation is to promote a more efficient depolymerization by treatment with the organoperoxide where it is envisioned that the presence of the double bonds within the butyl rubber terminates its depolymerization when the depolymerization process reaches the double bond unsaturation in the butyl rubber.

In a further aspect of the invention, to promote better processing of the butyl rubber-based sealant precursor composition, it is desired to use a butyl rubber that has a relatively high Mooney viscosity (ML+8) value at 125°C in a range of from 25 to 60, alternately from 40 to 60.

Thus a butyl rubber of very low isoprene-based unsaturation (for more effective depolymerization of the butyl rubber) and relatively high Mooney viscosity (to promote better physical handling of the sealant precursor composition) is desired.

In practice, it is desired herein for the butyl rubber-based sealant precursor composition to have a storage modulus (G') physical property, at a 5 percent dynamic strain at 100°C and 1 Hertz in a range of 170 to 350 kPa, alternately in a range of from 225 to 300 kPa.

For such purpose, it is desired herein for the depolymerized butyl rubber sealant composition to have a significant lower storage modulus (G') physical property, at a 5 percent dynamic strain at 100°C and 1 Hertz in a range of from 10 to 100 kPa, alternately in a range of from 10 to 65 kPa.

In practice, such storage modulus (G') may be determined, for example, by an RPA (Rubber Process Analyzer) instrument which measures the strain sweep at 100°C at 1 Hertz over a range of, for example, from 1 to 50 percent strain. Such storage modulus (G') measurement for rubber samples is well known to those having skill in such art. Such a Rubber Process Analyzer is RPA 2000™ instrument by Alpha Technologies, formerly the Flexsys Company and formerly the Monsanto Company. References to an RPA-2000 instrument may be found in the following publications: H. A. Palowski, et al, Rubber World, June 1992 and January 1997, as well as Rubber & Plastics News, April 26 and May 10, 1993.

In the description of this invention, the term "phr" is used to designate parts by weight of an ingredient per 100 parts of elastomer unless otherwise indicated. The terms "elastomer" and "rubber" are used interchangeably unless otherwise indicated. The terms "cure" and "vulcanize" are used interchangeably unless otherwise indicated.

Summary and Practice of the Invention

In accordance with this invention, a (carbon black reinforced) pneumatic rubber tire having a built-in non black colored puncture sealing layer is provided wherein said puncture sealing layer contains an at least partially organoperoxide-depolymerized butyl rubber-based sealant layer, (normally positioned between a carbon black reinforced halobutyl rubber-based tire innerliner layer and tire carcass, or between two tire innerliner rubber layers, and therefore covered by at least one tire innerliner rubber layer), wherein said puncture sealing layer is comprised of, based upon parts by weight per 100 parts by weight of said partially depolymerized butyl rubber exclusive of carbon black:

(A) a partially organoperoxide-depolymerized butyl rubber as a copolymer of isobutylene and isoprene, wherein said butyl rubber, prior to such depolymerization, is comprised of 0.5 to 5, preferably within a range of from 0.5 to 1 percent units derived from isoprene, and correspondingly from 95 to 99.5, preferably within a range of from 99 to 99.5, weight percent units derived from isobutylene;

(B) particulate reinforcing filler comprised of:

(1) 20 to 50 phr of synthetic amorphous silica, preferably precipitated silica, or
(2) 15 to 30 phr synthetic amorphous silica, preferably precipitated silica, and 5 to 20 phr of clay, preferably kaolin clay, or
(3) 15 to 30 phr synthetic amorphous silica, preferably precipitated silica, and 5 to 20 phr of calcium carbonate, or
(4) 15 to 30 phr synthetic amorphous silica, preferably precipitated silica, 5 to 15 phr of clay, preferably kaolin clay, and 5 to 15 phr of calcium carbonate;

(C) from zero to 6, alternately 0.5 to 5, phr of short organic fibers;
(D) a colorant of other than a black color wherein said colorant is selected from at least one of organic pigments, inorganic pigments and dyes, preferably from organic pigments and inorganic pigments;
(E) from zero to 20, alternately 2 to 15, phr of rubber processing oil, preferably a rubber processing oil having a maximum aromatic content of 15 weight percent, and preferably a naphthenic content in a range of from 35 to 45 weight percent and preferably a paraffinic content in a range of 45 to 55 weight percent.

Alternately or additionally, said particulate reinforcing filler may be comprised of:

(A) 20 to 50 phr of synthetic amorphous silica having a BET surface area in a range of from 50 to 70 m2/g, or
(B) 12 to 30 phr of synthetic amorphous silica having a BET surface area in a range of from 110 to 200 m2/g, or
(C) 15 to 30 phr synthetic amorphous silica having a BET surface area in a range of from 50 to 70 $m^2/g$ and 5 to 20 phr of clay, or
(D) 5 to 25 phr synthetic amorphous silica having a BET surface area in a range of from 110 to 200 $m^2/g$ and 5 to 20 phr of clay, or
(E) 15 to 30 phr synthetic amorphous silica having a BET surface area in a range of from 50 to 70 $m^2/g$ and 5 to 20 phr of calcium carbonate, or
(F) 5 to 25 phr synthetic amorphous silica having a BET surface area in a range of from 110 to 200 $m^2/g$ and 5 to 20 phr of calcium carbonate, or
(G) 15 to 30 phr synthetic amorphous silica having a BET surface area in a range of from 50 to 70 $m^2/g$, 5 to 15 phr of clay and 5 to 15 phr of calcium carbonate, or
(H) 5 to 25 phr synthetic amorphous silica having a BET surface area in a range of from 110 to 200 $m^2/g$, 5 to 15 phr of clay and 5 to 15 phr of calcium carbonate.

Therefore, preferably, said non-black colored sealant layer is positioned between a carbon black reinforced innerliner and tire carcass, or between two carbon black reinforced tire innerliners, and wherein said tire has a carbon black reinforced tread and sidewall.
A significant aspect of the invention is, for example, use of the non-black colored build-in sealant as a aid to:

(A) identify a puncture wound in a carbon black reinforced rubber innerliner, crown region, tread and/or sidewall of said tire, and/or
(B) identify the presence of the built-in non-black colored sealant in the tire, such as for example, in a tire retreading operation to physically detect the presence of the built-in sealant by its visually contrasting non-black colored appearance in the case of an open wound in a carbon black reinforced rubber innerliner or by a relatively softness of the rubber innerliner layer itself as a result of the associated underlying built-in sealant layer.

Accordingly, in an additional accordance with this invention, the tire is characterized by said non-black colored built-in sealant layer having the capability of visibly identifying a puncture wound which extends through a black colored carbon black reinforced tire rubber innerliner layer, black colored carbon black reinforced tire rubber tread and/or black colored carbon black reinforced tire rubber sidewall layer to said built-in sealant layer by a physical flow of a portion of said non-black colored built-in sealant layer through said puncture wound to form a contrastingly non-black colored sealant on a visible surface of said black colored carbon black reinforced innerliner, tread or sidewall.
In practice, as hereinbefore discussed, said synthetic amorphous silica may be treated by treatment prior to addition of said organoperoxide either in situ within the rubber composition or by pre-treatment of the silica prior to its addition to the rubber composition with

(A) a polyethylene glycol having a weight average molecular weight in a range of from 2,000 to 15,000, alternately 2,000 to 10,000, or
(B) an alkoxysilane or

(C) a coupling agent selected from a bis(3-trialkoxysilylalkyl) polysulfide or organomercaptoalkoxysilane, or
(D) a combination of alkylsilane, particularly an alkoxysilane, and bis(3-trialkoxysilylalkyl) polysulfide or organomercaptoalkoxysilane.

Accordingly, in one aspect of the invention, said synthetic amorphous silica may be a composite of precipitated silica and

(A) said polyethylene glycol, or
(B) alkoxysilane, or
(C) a coupling agent selected from a bis(3-trialkoxysilylalkyl) polysulfide or organomercaptoalkoxysilane, or
(D) a combination of alkylsilane, particularly an alkoxysilane, and bis(3-trialkoxysilylalkyl) polysulfide or organomercaptoalkoxysilane.

Representative examples of polyethylene glycols are polyethylene glycols having an average (weight average) molecular weight in a range of from 2,000 to 15,000, alternately from 2,000 to 10,000, are preferred.

Examples of commercially available polyethylene glycols may be, for example, those such as Carbowax™ PEG 3350 as well as Carbowax™ PEG 8000 from the Dow Chemical Company with said Carbowax™ PEG 8000 reportedly having a weight average molecular weight in a range of 7,000 to 9,000 as determined by its NIR (near infrared) method 1B-ZMETH1.3. A further discussion concerning various polyalkylene oxide polymers, and particularly polyethylene glycols including said Carbowax PEG 8000 may be found, for example, in US-A- 6,322,811 and 4,082,703.

Said bis(3-trialkoxysilylalkyl) polysulfide, preferably a bis(3-triethoxysilylpropyl) polysulfide, contains an average of from 2 to 4, preferably an average of from 2 to 2.6 or an average of from 3.5 to 4, connecting sulfur atoms in its polysulfidic bridge;
Said alkoxysilane may be of the general formula (I):

$$(I) \qquad\qquad (RO)_3 - Si - R^1$$

where R is selected from methyl and ethyl radicals, preferably ethyl radicals, and $R^1$ is a saturated alkyl radical having from 2 through 6 carbon atoms.

Representative of said alkoxysilanes are, for example, trimethoxy methyl silane, dimethoxy dimethyl silane, methoxy trimethyl silane, trimethoxy propyl silane, trimethoxy octyl silane, trimethoxy hexadecyl silane, dimethoxy dipropyl silane, triethoxy methyl silane, triethoxy propyl silane, triethoxy octyl silane, and diethoxy dimethyl silane.

Said organomercaptoalkoxysilane may be of the general formula (II):

$$(II) \qquad\qquad (X)_n (R^2 O)_{3-n} - Si-R^3 - SH$$

wherein X is a radical selected from chlorine, bromine, and alkyl radicals having from one to 16 carbon atoms; wherein $R^2$ is an alkyl radical selected from methylene and ethylene radicals, $R^3$ is an alkylene radical having from one to 16 carbon atoms and n is a value from zero to 3.

Representative of alkoxyorganomercaptosilanes, particularly for pre-treatment of the silica prior to its addition to the rubber composition are, for example, triethoxy mercaptopropyl silane, trimethoxy mercaptopropyl silane, methyl dimethoxy mercaptopropyl silane, methyl diethoxy mercaptopropyl silane, dimethyl methoxy mercaptopropyl silane, triethoxy mercaptoethyl silane, and tripropoxy mercaptopropyl silane.

In practice, various clays may be used. Representative of such clays are, for example, kaolin clays. It is envisioned herein that a benefit of utilization of such clay is to provide a modified, or tempered, degree of reinforcement, as compared to the silica, for the sealant precursor composition to aid in its aforesaid processing and also to aid, in combination with the silica, in providing the aforesaid resultant storage modulus (G') of the resultant depolymerized butyl rubber-based sealant composition.

In practice, the calcium carbonate may also be used. As with the aforesaid clay, it is envisioned that a benefit of utilization of such calcium carbonate is to provide a modified, or tempered, degree of reinforcement, as compared to the silica, for the sealant precursor composition to aid in its aforesaid processing and also to aid, in combination with the silica, in providing the aforesaid resultant storage modulus (G') of the resultant depolymerized butyl rubber-based sealant composition.

For this invention, various synthetic amorphous silicas may be used, such as, and preferably, precipitated silica.

Representative of such precipitated silicas are, for example and not intended herein to be limitative, HiSil 532™ from PPG Industries, Hubersil 4155™ from the J. M. Huber Company and Ultrasil™ VN2 and VN3 from the Degussa AG.

Such precipitated silicas are silica aggregates which are considered herein to be in an agglomerated (compacted) form with relatively very low BET (nitrogen) surfaces areas (e.g. reportedly about 60 $m^2$/g for the HiSil 532™ and Hubersil 4155™ silica aggregates, provided in an agglomerated form).

A method of measuring BET (nitrogen) surface area of precipitated silicas is ASTM D 1993-91, Standard Test Method for Precipitated Silica-Surface Area by Multipoint BET Nitrogen Adsorption which relates to the conventional theory described by Brunauer, Emmett and Teller in the Journal of the American Chemical Society, Volume 60, (1938). Page 309.

Accordingly, in one aspect of the invention, is considered herein an optimal BET surface area of the precipitated silica may be, for example, in a range of from 50 to 70 $m^2$/g, thus indicating a precipitated silica of a relatively large particle size.

However, in a further aspect of the invention, a precipitated silica having a considerably greater BET surface area (indicative of a significantly smaller particle size) might be used, if desired, such as, for example, a BET surface area in a range of from 110 to 200 $m^2$/g, although it is believed that the green strength of the sealant precursor will be significantly reduced with an associated increase in processing and handling difficulty. Representative of such precipitated silicas are, for example, HiSil 210™ and HiSil 315L™ from PPG Industries with reported BET values of 135 and 125 $m^2$/g, respectively. Although such precipitated silicas are not preferred silicas for use in this invention, if such smaller silicas are used, then the silica threshold in the sealant precursor and sealant composition is considered herein to be able to be reduced to a lower value to result in a range of the precipitated silica to be from 12 to 30 phr, of from 5 to 25 phr when used in combination with the clay and/or calcium carbonate.

The optional various rubber processing oils are well known to those having skill in such art. For this invention, a rubber processing oil having a low aromaticity content is preferred, namely a rubber processing oil having an aromaticity content of less than about 15 weight percent. Such a preferred rubber processing oil may be composed of, for example, 35 to 45 weight percent naphthenic content, 45 to 55 weight percent paraffinic content and an aromatic content of less than 15 weight percent (e.g. from 10 to 14 weight percent). It is considered herein that a representative of such preferred rubber processing oil is Tufflo 100™ from the Barton Solvent Company. The rubber processing oil, in relatively low concentrations, is seen herein to aid in mixing the ingredients for the sealant precursor composition and to aid in promoting the aforesaid processing of sealant precursor composition.

The optional short fibers may be selected from, for example, cotton fibers and from synthetic fibers selected from rayon, aramid, nylon and polyester fibers, and their mixtures. In practice, such cotton short fibers may have an average length, for example, in a range of up to 200 microns (e.g. an average length of 150 microns) and the synthetic (e.g. the polyester and nylon fibers) may have an average length, for example, of up to a maximum of 2,500 microns. The short fibers are considered herein to aid in promoting the effectiveness of the sealing ability of the resultant sealant composition. In relatively low concentrations, such synthetic fibers are not seen herein as significantly interfering with the processing of the sealant precursor composition yet as promoting the effectiveness of the resultant built-in sealant layer for its puncture sealing ability.

In practice, the colorant may be comprised of titanium dioxide. For example, the colorant of such sealant composition may preferably be composed of titanium dioxide where a white colored sealant layer is desired. Also, such colorant may contain, or be comprised, of titanium dioxide as a color brightener together with at least one non-black organic pigment and/or non-black inorganic pigment or dye.

Various colorants may be used to provide a non-black color to the sealant and sealant precursor composition. Representative of such colorants are, for example, yellow colored colorants as Diarylide Yellow™ pigment from PolyOne Corporation and Akrosperse E-6837™ yellow EPMB pigment masterbatch with an EPR (ethylene/propylene rubber) from the Akrochem Company. As discussed above, such yellow colored pigment may be used in combination and therefore together with titanium dioxide.

Various organoperoxides may be used for the sealant precursor butyl rubber-based composition. Preferably organoperoxides are used which become active (e.g. generate peroxide free radicals) at high temperatures, that is, for example, above 100°C. Such organoperoxides are referred to therein as active peroxides. Examples of such organoperoxides which are considered herein as being active organoperoxides are, for example, tertbutyl perbenzoate and dialkyl peroxides with the same or different radicals, such as dialkylbenzene peroxides and alkyl pre-esters. Preferably the active organoperoxide will contain two peroxide groups. Frequently the peroxide groups are attached to a tertiary butyl group. The basic moiety on which the two peroxide groups are suspended can be aliphatic, cycloaliphatic, or aromatic radicals. Some representative examples of such active organoperoxides are, for example, n-butyl 4,4-di-(tert-butylperoxy) valerate, 2,5-bis(t-butyl peroxy)-2,5-dimethyl hexane; 1,1-di-t-butyl peroxi-3,3,5-trimethyl cyclohexane; 2,5-dimethyl-2,5-di(t-butyl peroxy) hexyne-3; p-chlorobenzyl peroxide; 2,4-dichlorobenzyl peroxide; 2,2-bis-(t-butyl peroxi)-butane; di-t-butyl peroxide; benzyl peroxide; 2,5-bis(t-butyl peroxy)-2,5-dimethyl hexane, dicumyl peroxide; and 2,5-dimethyl-2,5-di(t-butyl peroxy) hexane. The n-butyl 4,4-di-(tert-butylperoxy) valerate may be a preferred organoperoxide for use in the depolymerizing of the butyl rubber of the butyl rubber containing sealant precursor.

Such organoperoxide may be provided on a mineral carrier such as, for example calcium carbonate or a combination of calcium carbonate and calcium silicate. For example, the n-butyl 4,4-di-(tert-butylperoxy) valerate may be provided as a composite with a mineral carrier. Such mineral carrier may be, for example, combination of calcium carbonate and calcium silicate such as, for example, as Trigonox 17-40B-pd™ from the Akzo Nobel Polymer Chemicals LLC Company.

Thus, such active organoperoxides may be added to the sealant precursor butyl rubber-based composition layer usually as a composite with an inert, free-flowing mineral carrier, such as, for example, calcium carbonate. The organoperoxide as a composite thereof with a mineral carrier, such as for example calcium carbonate, is preferred for storing the peroxide and handling and processing. Such composite may be composed of, for example, from 35 to 60 weight percent of the active organoperoxide.

In practice, a pneumatic tire having a puncture sealing ability comprised of an assembly of components comprised of an outer circumferential (sulfur curable) rubber tread, (sulfur curable) rubber carcass supporting said tread and an inner (sulfur curable) halobutyl rubber-based tire innerliner layer, may be prepared by, for example:

(A) positioning a layer of an uncured butyl rubber-based rubber composition, exclusive of sulfur curative, as a sealant layer precursor between said innerliner and rubber carcass barrier layer, wherein said sealant precursor butyl rubber-based composition is prepared by blending, based upon parts by weight per 100 parts of butyl rubber (phr):

(1) 100 phr of butyl rubber as a copolymer of isobutylene and isoprene which contains 0.05 to 5, preferably from 0.05 to 1 percent units derived from isoprene and, correspondingly 95 to 99.95, preferably from 99 to 99.95, percent derived from isobutylene, and

(2) a particulate filler comprised of

(a) 20 to 50 phr of synthetic amorphous silica, preferably precipitated silica, or
(b) 15 to 30 phr synthetic amorphous silica, preferably precipitated silica, and 5 to 20 phr of clay, preferably kaolin clay, or
(c) 15 to 30 phr synthetic amorphous silica, preferably precipitated silica, and 5 to 20 phr of calcium carbonate, or
(d) 15 to 30 phr synthetic amorphous silica, preferably precipitated silica, 5 to 15 phr of clay, preferably kaolin clay, and 5 to 15 phr of calcium carbonate, and;

(3) optionally from zero to 6, alternately 0.5 to 5, phr of short organic fibers;
(4) a colorant of other than a black color wherein said colorant is selected from at least one of organic pigments, inorganic pigments and dyes;
(5) optionally a polyethylene glycol having a number average molecular weight in a range of from 2,000 to 15,000, alternately from 2,000 to 10,000; and
(6) from zero to 20, alternately 4 to 15, phr of rubber processing oil, preferably a rubber processing oil having a maximum aromatic content of 15 weight percent, and preferably a naphthenic content in a range of from 35 to 45 weight percent and preferably a paraffinic content in a range of 45 to 55 weight percent, and
(7) a free radical generating organoperoxide;

wherein said organoperoxide is blended with said butyl rubber based rubber composition subsequent to the addition of said synthetic amorphous silica, clay and calcium carbonate and said optional polyethylene glycol;

(B) vulcanizing said tire assembly in a suitable mold at a temperature in a range of from 130°C to 175°C for a sufficient period of time to partially depolymerize said butyl rubber and thereby form a built-in sealant layer.

Alternately, in such process, the said particulate reinforcing filler may be comprised of:

(A) 20 to 50 phr of synthetic amorphous silica having a BET surface area in a range of from 50 to 70 m2/g, or
(B) 12 to 30 phr of synthetic amorphous silica having a BET surface area in a range of from 110 to 200 m2/g, or
(C) 15 to 30 phr synthetic amorphous silica having a BET surface area in a range of from 50 to 70 $m^2/g$ and 5 to 20 phr of clay, or
(D) 5 to 25 phr synthetic amorphous silica having a BET surface area in a range of from 110 to 200 $m^2/g$ and 5 to 20 phr of clay, or
(E) 15 to 30 phr synthetic amorphous silica having a BET surface area in a range of from 50 to 70 $m^2/g$ and 5 to 20 phr of calcium carbonate, or
(F) 5 to 25 phr synthetic amorphous silica having a BET surface area in a range of from 110 to 200 $m^2/g$ and 5 to 20 phr of calcium carbonate, or

(G) 15 to 30 phr synthetic amorphous silica having a BET surface area in a range of from 50 to 70 m$^2$/g, 5 to 15 phr of clay and 5 to 15 phr of calcium carbonate, or

(H) 5 to 25 phr synthetic amorphous silica having a BET surface area in a range of from 110 to 200 m$^2$/g, 5 to 15 phr of clay and 5 to 15 phr of calcium carbonate.

In practice, it is conventionally preferred that the butyl rubber and silica are blended in at least one sequential preparatory, or non-productive, mixing stage in the absence of the organoperoxide (together with at least one of the additional ingredients) followed by a final, or productive, mixing stage in which the organoperoxide (and possibly one or more of the additional ingredients) is added.

Conventionally, the non-productive mixing stage(s) may be conducted, for example, by mixing the ingredients to a temperature in a range of from 110 to 150°C and the subsequent productive mixing stage may be conducted, for example, by mixing the ingredients to a temperature in a range of from 85 to 100°C.

A significant aspect of this invention is the at least partial depolymerization of the butyl rubber layer built into the tire (between the tire innerliner and tire carcass) during the vulcanization of the tire itself in a suitable mold at an elevated temperature via an organoperoxide in the presence of amorphous (synthetic) silica which may optionally include clay and/or calcium carbonate to create the built-in colored puncture sealant layer.

This is considered herein to be significant because said butyl rubber sealant precursor composition is conveniently processable as a rubber composition which can be suitably built as a rubber layer into a tire.

In practice, upon vulcanization of the tire assembly under conditions of elevated temperature, a major portion of the uncured butyl rubber composition is considered herein to be depolymerized in the presence of the organoperoxide compound to form a tacky material.

In practice, said tire innerliner halobutyl rubber-based layer is typically a sulfur curative-containing halobutyl rubber composition of a halobutyl rubber such as for example chlorobutyl rubber or bromobutyl rubber.

Such tire halobutyl rubber-based innerliner layer may also contain one or more sulfur curable diene-based elastomers such as, for example, cis 1,4-polyisoprene natural rubber, cis 1,4-polybutadiene rubber and styrene/butadiene rubber, and their mixtures, or more preferably a combination of one or more of said halobutyl rubbers and said diene based elastomers.

As the tire is vulcanized together with the butyl rubber-based rubber composition layer (the sealant layer precursor) sandwiched between the tire carcass and the tire's rubber innerliner, the butyl rubber of the butyl rubber-based composition layer which is to become the sealant layer, becomes partially depolymerized, preferably to an extent that its aforesaid resultant storage modulus (G') physical property, at a 5 percent dynamic strain at 100°C and 1 Hertz, in a range of from 10 to 100 kPa, alternately in a range of from 10 to 40 kPa.

In effect, the butyl rubber in the butyl rubber based composition sealant layer is depolymerized to a low viscosity to form a tacky material which has puncture sealing properties. Thus, the butyl rubber composition sealant precursor layer is transformed into a puncture sealant layer during the curing of the tire. This at least partial depolymerization of the butyl rubber composition layer is effectuated by the presence of the one or more free radical-generating organoperoxides contained in the butyl rubber sealant precursor composition.

In practice, the butyl rubber composition as the sealant precursor contains a sufficient amount of the free radical-generating organoperoxide to cause the butyl rubber to partially depolymerize, which may be, for example, in a range of from 0.5 to 15 phr of the active organoperoxide depending somewhat upon the time and temperature of the tire curing operation and the degree of depolymerization desired.

The various components of the sealant layer can be mixed together using convenient rubber mixing equipment, particularly an internal rubber mixer. The rubber composition used in the sealant precursor layer typically has sufficient viscosity and unvulcanized tack to enable its incorporation into an unvulcanized tire without significantly departing from conventional tire building techniques.

In an exemplary method of this invention, the butyl rubber-based sealant precursor composition can be formed into a rubber strip by using conventional equipment such as a calender, extruder, or any combination thereof, and the rubber strip assembled into the tire. In building the tires of this invention a rubber innerliner of a butyl rubber based (e.g. bromobutyl rubber) rubber composition is first applied to a building drum and then the strip of butyl rubber based sealant precursor layer is applied to the layer of innerliner and thereafter the remainder of various carcass plies and layers of the tire assembly. The butyl rubber based sealant precursor layer is thereby assembled into the unvulcanized tire assembly of components between an innerliner layer and tire carcass.

The built-in sealant layer may, for example, be positioned between a tire innerliner rubber layer and tire carcass or between two tire innerliner rubber layers wherein said sealant layer may:

(A) extend from one shoulder of the tire to the other through the crown region of the tire;

(B) be positioned in at least one tire shoulder area region and extend into at least a portion of the adjoining tire sidewall portion of the tire, or
(C) extend from sidewall-to-sidewall through the tire crown region.

The thickness of the sealant composition layer can vary greatly in an unvulcanized puncture sealant containing tire. Generally, the thickness of the sealant composition layer may range from 0.13 cm (0.05 inches) to 1.9 cm (0.75 inches). In passenger tires it is normally desired for the sealant composition layer to have a thickness of 0.32 cm (0.125 inches) whereas for truck tires, a thickness of 0.76 cm (0.3 inches) or greater might be desired.

After the unvulcanized pneumatic rubber tires of this invention are assembled they are vulcanized using a normal tire cure cycle. The tires of this invention can be cured over a wide temperature range. For example, passenger tires or truck tires might be cured at a temperature ranging from 130°C to 170°C. Thus, a cure temperature may range, for example, from 130°C to 170°C and for a period of time (e.g. from 10 to 45 minutes or more depending somewhat upon the size of the tire and the degree of desired depolymerization of the butyl rubber as well as the thickness of the sealant layer itself) and sufficient to at least partially depolymerize said sealant precursor layer to the aforesaid storage modulus (G') physical property. In practice, a period of time used to vulcanize the tires, in a suitable mold, may therefore, for example, have a duration of 10 to 14 minutes for a passenger tire and for 25 to 55 minutes for a truck tire.

Accordingly, in one aspect of the invention, a self-sealing pneumatic rubber tire of this invention is envisioned wherein the tire has sidewalls, a supporting carcass, inextensible beads, an innerliner (air barrier layer), a sealant layer, and an outer circumferential tread (tread portion). The individual sidewalls extend radially inward from the axial outer edges of the tread portion to join the respective inextensible beads. The supporting carcass acts as a supporting structure for the tread portion and sidewalls. The sealant layer is disposed between said supporting carcass and said innerliner. The outer circumferential tread is adapted to be ground contacting when the tire is in use.

The following examples are included to further illustrate the method of manufacturing the self-sealing pneumatic rubber tires of this invention. Unless specifically indicated otherwise, parts and percentages are given by weight.

EXAMPLE I

Butyl rubber-based sealant precursor compositions are prepared by mixing ingredients in an internal mixer. The ingredients are mixed in a first, non-productive, mixing stage without the organoperoxide followed by a second, productive, mixing stage in which the organoperoxide is added. The ingredients are illustrated in the following Table 1. Sample A represents the prepared rubber composition and Sample B represents a prospective rubber composition. The parts and percentages are by weight unless otherwise indicated.

Table 1

| Material | Parts | |
|---|---|---|
| | Sample A | Sample B |
| First (Non-Productive) Mixing Step (for 2 to 3 minutes to 120°C) | | |
| Butyl rubber[1] | 100 | 100 |
| Amorphous silica[2] | 20 | 20 |
| Clay[3] | 10 | 7 |
| Calcium carbonate | 0 | 10 |
| Polyethylene glycol[4] | 0.25 | 0.05 |
| Rubber processing oil[5] | 3 | 3 |
| Titanium dioxide pigment | 2 | 2 |
| Colorant as a yellow colored pigment masterbatch[6] | 1 | 1 |
| Second (Productive) Mixing Step (for 1 to 2 minutes to 93°C) | | |
| Organoperoxide, 40 percent active[7] | 8 to 12 | 8 to 12 |

[1]Butyl rubber as Exxon 068™ from the ExxonMobil Company, having a Mooney (1 +8) viscosity at 125°C of 51, as a copolymer of isobutylene and isoprene having less than one percent units derived from isoprene

[2]Amorphous precipitated silica as Hubersil 4155™ from J. M. Huber Company

[3]Kaolin clay as RC-32™ from Thiele Kaolin Company

[4]Polyethylene glycol having a weight average molecular weight of about 8,000 (understood to be about plus or minus about 1,000) as Carbowax PEG 8000™ from the Dow Chemical Company

[5]Rubber processing oil as Tufflo 100™ from Barton Solvents Company reportedly a naphthenic, paraffinic rubber processing oil having a maximum aromatic content of less than 15 weight percent

[6]A yellow colored organic/inorganic pigment as Akrosperse E-6837™ yellow EPMB pigment masterbatch with EPR (ethylene/propylene rubber), in a 50/50 weight ratio of yellow pigment to EPR, from the Akrochem Company and reported in Table 1 as the composite.

[7]Composite of n-butyl 4,4-di-(tert-butylperoxy) valerate with a mineral carrier as a combination of calcium carbonate and calcium silicate as Trigonox 17-40B pd™ from the Akzo Nobel Polymer Chemicals LLC company in a 40/60 weight ratio of the organoperoxide to carrier and reported in Table 1 as the composite.

The storage modulus (G') of Sample A, representing a butyl rubber-based sealant precursor composition was determined to be 260 kPa.

The storage modulus (G') of Sample A after heating it to a temperature of 150°C for 20 minutes to cause a depolymerization of the butyl rubber by the organoperoxide and to thereby represent a depolymerized butyl rubber sealant composition was determined to be 53 kPa.

The storage modulus (G') physical property is determined at a 5 percent dynamic strain at 100°C and 1 Hertz by an aforesaid RPA (Rubber Process Analyzer) instrument which measures the strain sweep at 100°C and 1 Hertz over a range of from 1 to 50 percent strain. The Rubber Process Analyzer instrument used was RPA 2000™ instrument by Alpha Technologies, formerly the Flexsys Company and formerly the Monsanto Company.

EXAMPLE II

A tubeless pneumatic steel belted medium radial truck tire of the type G286 315/80R22.5 is prepared by first applying a standard butyl rubber innerliner layer (e.g. bromobutyl rubber composition) to a standard building drum. Then a layer of butyl rubber-based sealant precursor of the composition of Sample A of Example I having a thickness of 0.76 cm (0.3 inches) is applied to the innerliner layer on the building drum followed by application of diene rubber based carcass components, including the carcass plies, tread, sidewalls and beads, to form the uncured, or green, tire construction, or assembly, which contains the built-in butyl rubber-based sealant precursor layer.

The green tire is cured in a suitable tire curing mold at a temperature of up to 150°C for 42 minutes to form a tire with a built-in sealant layer having a thickness of 0.38 cm (0.15 inches) formed by a partial (substantial) depolymerization of the butyl rubber-based sealant precursor layer by the organoperoxide at the elevated tire cure temperature.

The tire was mounted on a metal rim and inflated to a suitable inflation pressure.

The tire was punctured by driving a combination of 24 nails of various diameters, namely a combination of eight No. 8, box nails, eight No. 12 box nails and eight No. 20 common nails, into the tread and extending through the built-in sealant layer onto the air pressured cavity of the inflated tire. Half, or 12, of the nails were removed. The punctured inflated tire was then run under a load of 75 percent of the rated load of the tire against a 170 cm (67 inch) diameter dynamometer at suitable vehicular speeds of up to 48 kilometers per hour for an equivalent vehicular distance of 10,000 miles, or 16,000 km. It was observed that the built-in sealant layer satisfactorily sealed the punctured tire from any significant loss of air.

**Claims**

1. A pneumatic rubber tire having a built-in non-black colored puncture sealing layer, wherein said puncture sealing layer contains an at least partially organoperoxide-depolymerized butyl rubber-based sealant layer positioned between a halobutyl rubber tire innerliner layer and a conjugated diene-based tire carcass or between two halobutyl rubber innerliner layers, and wherein said puncture sealing layer is comprised of, based upon parts by weight per 100 parts by weight of said partially depolymerized butyl rubber exclusive of carbon black:

   (A) a partially organoperoxide-depolymerized butyl rubber as a copolymer of isobutylene and isoprene, wherein said butyl rubber, prior to such depolymerization, is comprised of 0.5 to 5 percent units derived from isoprene, and correspondingly from 95 to 99.5 weight percent units derived from isobutylene;
   (B) particulate reinforcing filler comprised of:

      (1) from 20 to 50 phr of synthetic amorphous silica, or
      (2) from 15 to 30 phr synthetic amorphous silica and 5 to 20 phr of clay, or
      (3) from 15 to 30 phr synthetic amorphous silica and 5 to 20 phr of calcium carbonate, or
      (4) from 15 to 30 phr synthetic amorphous silica, 5 to 15 phr of clay and 5 to 15 phr of calcium carbonate;

   (C) from zero to 6 phr of short organic fibers;
   (D) a colorant of other than a black color wherein said colorant is selected from at least one of organic pigments, inorganic pigments and dyes; and
   (E) from zero to 20 phr of rubber processing oil.

2. The pneumatic rubber tire of claim 1 wherein said particulate reinforcing filler is comprised of:

   (1) from 20 to 50 phr of synthetic amorphous preferably precipitated silica having a BET surface area in a range of from 50 to 70 m2/g, or
   (2) from 12 to 30 phr of synthetic amorphous preferably precipitated silica having a BET surface area in a range of from 110 to 200 m2/g, or
   (3) from 15 to 30 phr synthetic amorphous preferably precipitated silica having a BET surface area in a range of from 50 to 70 $m^2$/g and 5 to 20 phr of clay, or
   (4) from 5 to 25 phr synthetic amorphous preferably precipitated silica having a BET surface area in a range of from 110 to 200 $m^2$/g and 5 to 20 phr of clay, or
   (5) from 15 to 30 phr synthetic amorphous preferably precipitated silica having a BET surface area in a range of from 50 to 70 $m^2$/g and 5 to 20 phr of calcium carbonate, or
   (6) from 5 to 25 phr synthetic amorphous preferably precipitated silica having a BET surface area in a range of from 110 to 200 $m^2$/g and 5 to 20 phr of calcium carbonate, or
   (7) from 15 to 30 phr synthetic amorphous preferably precipitated silica having a BET surface area in a range of from 50 to 70 $m^2$/g, 5 to 15 phr of clay and 5 to 15 phr of calcium carbonate, or
   (8) from 5 to 25 phr synthetic amorphous preferably precipitated silica having a BET surface area in a range of from 110 to 200 $m^2$/g, 5 to 15 phr of clay and 5 to 15 phr of calcium carbonate.

3. The tire of claim 2, wherein said silica, and optionally said clay and calcium carbonate, has been treated either in situ within the rubber composition prior to addition of the organoperoxide or pre-treated prior to mixing with the rubber composition with:

(A) a polyethylene glycol having a weight average molecular weight in a range of from 2,000 to 15,000, or
(B) an alkoxysilane or
(C) a coupling agent selected from a bis(3-triethoxysilylpropyl) polysulfide or organomercaptoalkoxysilane, or
(D) a combination of an alkoxysilane, and bis(3-triethoxysilylpropyl) polysulfide or organomercaptoalkoxysilane.

4.  A method of preparing a pneumatic tire having a puncture sealing ability comprised of an assembly of components comprised of an outer circumferential sulfur curable rubber tread, at least one rubber carcass ply supporting said tread and at least one inner halobutyl rubber-based tire innerliner layer, wherein
said method comprises:

(A) positioning a layer of an uncured butyl rubber-based rubber composition, exclusive of sulfur curative, as a sealant layer precursor between said innerliner layer and rubber carcass or between two of said innerliner layers, wherein said sealant precursor butyl rubber-based composition is prepared by blending, based upon parts by weight per 100 parts of butyl rubber (phr):

(1) 100 phr of butyl rubber as a copolymer of isobutylene and isoprene which contains 0.05 to 5 percent units derived from isoprene and, correspondingly 95 to 99.95 percent derived from isobutylene, and
(2) a particulate filler comprised of

(a) from 20 to 50 phr of synthetic amorphous preferably precipitated silica, or
(b) from 15 to 30 phr synthetic amorphous preferably precipitated silica and 5 to 20 phr of clay, or
(c) from 15 to 30 phr synthetic amorphous preferably precipitated silica and 5 to 20 phr of calcium carbonate, or
(d) from 15 to 30 phr synthetic amorphous preferably precipitated silica, 5 to 15 phr of clay and 5 to 15 phr of calcium carbonate, and;

(3) from zero to 6 phr of short organic fibers;
(4) a colorant of other than a black color wherein said colorant is selected from at least one of organic pigments, inorganic pigments and dyes;
(5) optionally a polyethylene glycol having a number average molecular weight in a range of from 2,000 to 15,000;
(6) from zero to 20 phr of rubber processing oil; and
(7) a free radical generating organoperoxide;

wherein said organoperoxide is blended with said butyl rubber based rubber composition subsequent to the addition of said synthetic amorphous silica, clay and calcium carbonate, and optionally polyethylene glycol;
(B) vulcanizing said tire assembly in a suitable mold at a temperature in a range of from 130°C to 175°C for a sufficient period of time to partially depolymerize said butyl rubber and thereby form a built-in sealant layer.

5.  The method of claim 4, wherein said silica, and optionally said clay and calcium carbonate, is treated either in situ within the rubber composition prior to addition of the organoperoxide or pre-treated prior to mixing with the rubber composition with:

(A) a polyethylene glycol having a weight average molecular weight in a range of from 2,000 to 15,000, or
(B) an alkoxysilane, or
(C) a coupling agent selected from a bis(3-triethoxysilylpropyl) polysulfide or organomercaptoalkoxysilane, or
(D) a combination of an alkoxysilane, and bis(3-triethoxysilylpropyl) polysulfide or organomercaptoalkoxysilane.

6.  The method of claim 4 or 5, wherein said organoperoxide depolymerized butyl rubber is depolymerized with an organoperoxide selected from n-butyl 4,4-di-(tert-butylperoxy) valerate, 2,5-bis(t-butyl peroxy)-2,5-dimethyl hexane; 1,1-di-t-butyl peroxi-3,3,5-trimethyl cyclohexane; 2,5-dimethyl-2,5-di(t-butyl peroxy) hexyne-3; p-chlorobenzyl peroxide; 2,4-dichlorobenzyl peroxide; 2,2-bis-(t-butyl peroxi)-butane; di-t-butyl peroxide; benzyl peroxide; 2,5-bis(t-butyl peroxy)-2,5-dimethyl hexane, dicumyl peroxide; and 2,5-dimethyl-2,5-di(t-butyl peroxy) hexane; and/or wherein said alkoxysilane is selected from trimethoxy methyl silane, dimethoxy dimethyl silane, methoxy trimethyl silane, trimethoxy propyl silane, trimethoxy octyl silane, trimethoxy hexadecyl silane, dimethoxy dipropyl silane, triethoxy methyl silane, triethoxy propyl silane, triethoxy octyl silane, and diethoxy dimethyl silane; and/or wherein said organomercaptoalkoxysilane is of the general formula (II):

$$(II) \qquad (X)_n\,(R^2\,O)_{3-n} - Si\text{-}R^3 - SH$$

wherein X is a radical selected from chlorine, bromine, and alkyl radicals having from one to 16 carbon atoms; wherein $R^2$ is an alkyl radical selected from methylene and ethylene radicals, $R^3$ is an alkylene radical having from one to 16 carbon atoms and n is a value from zero to 3.

7. The method of at least one of claims 4 - 6, wherein said coupling agent is an alkoxyorganomercaptosilane is selected from triethoxy mercaptopropyl silane, trimethoxy mercaptopropyl silane, methyl dimethoxy mercaptopropyl silane, methyl diethoxy mercaptopropyl silane, dimethyl methoxy mercaptopropyl silane, triethoxy mercaptoethyl silane, and tripropoxy mercaptopropyl silane.

8. The method of at least one of the preceding claims 4 through 7, wherein the butyl rubber-based sealant precursor composition has a storage modulus (G') physical property, at a 5 percent dynamic strain at 100°C and 1 Hertz, in a range of 170 to 350 kPa and said depolymerized butyl rubber sealant composition has a storage modulus (G') physical property, at a 5 percent dynamic strain and at 100°C and 1 Hertz, in a range of from 10 to 100 kPa.

9. The method of any of the preceding claims 4 through 8, wherein said sealant composition contains from 0.5 to 5 phr of short fibers selected from cotton fibers and from synthetic fibers selected from rayon, aramid, nylon and polyester fibers, and their mixtures.

10. The method of any of the preceding claims 4 through 9, wherein said sealant layer is positioned between a carbon black reinforced tire innerliner rubber layer and tire carcass or between two tire innerliner rubber layers and, wherein said sealant layer:

(A) extends from one shoulder of the tire to the other through the crown region of the tire;
(B) is positioned in at least one tire shoulder area region and extends into at least a portion of the adjoining tire sidewall portion of the tire, or
(C) extends from sidewall-to-sidewall through the tire crown region.

**Patentansprüche**

1. Gummi-Luftreifen mit einer eingebauten, nicht-schwarzen, gefärbten Durchstich-Dichtungsschicht, wobei besagte Durchstich-Dichtungsschicht eine mindestens teilweise Organoperoxid-depolymerisierte butylkautschukbasierte Dichtungsschicht, die zwischen einer Halobutylkautschuk-Reifeninnenisolierungsschicht und einer Reifenkarkasse auf Basis konjugierten Diens oder zwischen zwei Halobutylkautschuk-Innenisolierungsschichten positioniert ist, enthält, und wobei besagte Durchstich-Dichtungsschicht, basiert auf Gewichtsteilen je 100 Gewichtsteile besagten teilweise depolymerisierten Butylkautschuks, unter Ausschluss von Carbon Black, aufweist:

(A) einen teilweise Organoperoxid-depolymerisierten Butylkautschuk als Copolymer von Isobutylen und Isopren, wobei besagter Butylkautschuk, vor solcher Depolymerisation, 0,5 bis 5 Prozent von Isopren abgeleiteten Einheiten aufweist, und entsprechend aus 95 bis 99,5 Gewichtsprozent von Isobutylen abgeleiteten Einheiten;
(B) partikelförmigem Verstärkungsfüllstoff, aufweisend:

(1) 20 bis 50 ThK synthetisches amorphes Silika, oder
(2) 15 bis 30 ThK synthetisches amorphes Silika und 5 bis 20 ThK Ton, oder
(3) 15 bis 30 ThK synthetisches amorphes Silika und 5 bis 20 ThK Calciumcarbonat, oder
(4) 15 bis 30 ThK synthetisches amorphes Silika, 5 bis 15 ThK Ton und 5 bis 15 ThK Calciumcarbonat;

(C) Null bis 6 ThK organische Kurzfasern;
(D) einen Farbstoff von einer anderen Farbe als Schwarz, wobei besagter Farbstoff aus mindestens einem von organischen Pigmenten, anorganischen Pigmenten und Farben ausgewählt ist; und
(E) Null bis 20 ThK Kautschukverarbeitungsöl.

2. Gummi-Luftreifen nach Anspruch 1, wobei besagter partikelförmiger Verstärkungsfüllstoff aufweist:

(1) 20 bis 50 ThK synthetisches amorphes, bevorzugt ausgefälltes, Silika mit einer BET-Oberfläche in einem Bereich von 50 bis 70 m²/g, oder

(2) 12 bis 30 ThK synthetisches amorphes, bevorzugt ausgefälltes, Silika mit einer BET-Oberfläche in einem Bereich von 110 bis 200 m²/g, oder

(3) 15 bis 30 ThK synthetisches amorphes, bevorzugt ausgefälltes, Silika mit einer BET-Oberfläche in einem Bereich von 50 bis 70 m²/g und 5 bis 20 ThK Ton, oder

(4) 5 bis 25 ThK synthetisches amorphes, bevorzugt ausgefälltes, Silika mit einer BET-Oberfläche in einem Bereich von 110 bis 200 m²/g und 5 bis 20 ThK Ton, oder

(5) 15 bis 30 ThK synthetisches amorphes, bevorzugt ausgefälltes, Silika mit einer BET-Oberfläche in einem Bereich von 50 bis 70 m²/g und 5 bis 20 ThK Calciumcarbonat, oder

(6) 5 bis 25 ThK synthetisches amorphes, bevorzugt ausgefälltes, Silika mit einer BET-Oberfläche in einem Bereich von 110 bis 200 m²/g und 5 bis 20 ThK Calciumcarbonat, oder

(7) 15 bis 30 ThK synthetisches amorphes, bevorzugt ausgefälltes, Silika mit einer BET-Oberfläche in einem Bereich von 50 bis 70 m²/g, 5 bis 15 ThK Ton und 5 bis 15 ThK Calciumcarbonat, oder

(8) 5 bis 25 ThK synthetisches amorphes, bevorzugt ausgefälltes, Silika mit einer BET-Oberfläche in einem Bereich von 110 bis 200 m²/g, 5 bis 15 ThK Ton und 5 bis 15 ThK Calciumcarbonat.

3. Reifen nach Anspruch 2, wobei das Silika und optional der Ton und das Calciumcarbonat entweder in situ innerhalb der Kautschukzusammensetzung vor dem Zusatz des Organoperoxids behandelt oder vor dem Mischen mit der Kautschukzusammensetzung vorbehandelt wurde mit:

(A) einem Polyethylenglykol mit einer gewichtsmittleren Molmasse in einem Bereich von 2.000 bis 15.000, oder
(B) einem Alkoxysilan, oder
(C) einem Haftvermittler, ausgewählt aus einem Bis(3-triethoxysilylpropyl)polysulfid oder Organomercaptoalkoxysilan, oder
(D) einer Kombination eines Alkoxysilans und Bis(3-triethoxysilylpropyl)polysulfid oder Organomercaptoalkoxysilan.

4. Verfahren zur Herstellung eines Luftreifens mit einer Durchstich-Dichtungsfähigkeit, aufweisend eine Baugruppe aus Bauteilen, aufweisend eine äußere umfangsgerichtete schwefelvulkanisierbare Gummilauffläche, mindestens eine Gummikarkassenlage, die besagte Lauffläche unterstützt, und mindestens eine innere Halobutylkautschuk-basierte Reifeninnenisolierungsschicht, wobei besagtes Verfahren umfasst:

(A) Positionieren einer Schicht einer unvulkanisierten, butylkautschukbasierten Kautschukzusammensetzung, unter Ausschluss von Schwefelvulkanisationsmittel, als Dichtungsschicht-Vorläufer zwischen die Innenisolierungsschicht und die Gummikarkasse oder zwischen zwei solche Innenisolierungsschichten, wobei die butylkautschukbasierte Dichtungsvorläuferzusammensetzung hergestellt wird durch Mischen, auf Basis von Gewichtsteilen je 100 Teile Butylkautschuk (ThK), von:

(1) 100 ThK Butylkautschuk als Copolymer von Isobutylen und Isopren, das 0,05 bis 5 Prozent von Isopren abgeleitete Einheiten, und entsprechend 95 bis 99,95 Gewichtsprozent von Isobutylen abgeleitete Einheiten enthält, und
(2) einem partikelförmigem Verstärkungsfüllstoff, aufweisend:

(a) 20 bis 50 ThK synthetisches amorphes, bevorzugt ausgefälltes, Silika, oder
(b) 15 bis 30 ThK synthetisches amorphes, bevorzugt ausgefälltes, Silika und 5 bis 20 ThK Ton, oder
(c) 15 bis 30 ThK synthetisches amorphes, bevorzugt ausgefälltes, Silika und 5 bis 20 ThK Calciumcarbonat, oder
(d) 15 bis 30 ThK synthetisches amorphes, bevorzugt ausgefälltes, Silika, 5 bis 15 ThK Ton und 5 bis 15 ThK Calciumcarbonat, und

(3) Null bis 6 ThK organischen Kurzfasern;
(4) einem Farbstoff einer anderen Farbe als Schwarz, wobei besagter Farbstoff aus mindestens einem von organischen Pigmenten, anorganischen Pigmenten und Farben ausgewählt ist;
(5) optional einem Polyethylenglykol mit einer zahlenmittleren Molmasse in einem Bereich von 2.000 bis 15.000;
(6) Null bis 20 ThK Kautschukverarbeitungsöl; und
(7) einem freie Radikale erzeugenden Organoperoxid;

wobei das Organoperoxid nachfolgend an den Zusatz des synthetischen amorphen Silikas, Tons und Calciumcarbonats, und optional von Polyethylenglykol, mit der butylkautschukbasierten Kautschukzusammensetzung vermischt wird;

(B) Vulkanisieren der Reifenbaugruppe in einer geeigneten Formpresse auf einer Temperatur in einem Bereich von 130°C bis 175°C für einen ausreichenden Zeitraum, um den Butylkautschuk teilweise zu depolymerisieren und dadurch eine eingebaute Dichtungsschicht zu bilden.

5. Verfahren nach Anspruch 4, wobei das Silika, und optional der Ton und das Calciumcarbonat, entweder in situ innerhalb der Kautschukzusammensetzung vor dem Zusatz des Organoperoxids behandelt oder vor dem Mischen mit der Kautschukzusammensetzung vorbehandelt wurde mit:

(A) einem Polyethylenglykol mit einer gewichtsmittleren Molmasse in einem Bereich von 2.000 bis 15.000, oder
(B) einem Alkoxysilan, oder
(C) einem Haftvermittler, ausgewählt aus einem Bis(3-triethoxysilylpropyl)polysulfid oder Organomercaptoalkoxysilan, oder
(D) einer Kombination eines Alkoxysilans und Bis(3-triethoxysilylpropyl)polysulfid oder Organomercaptoalkoxysilan.

6. Verfahren nach Anspruch 4 oder 5, wobei der Organoperoxid-depolymerisierte Butylkautschuk mit einem Organoperoxid depolymerisiert wird, ausgewählt aus n-Butyl-4,4-di(tert-butylperoxy)valerat, 2,5-Bis(t-butylperoxy)-2,5-dimethylhexan; 1,1-Di-t-butylperoxy-3,3,5-trimethylcyclohexan; 2,5-Dimethyl-2,5-di(t-butylperoxy)hexyn-3; p-Chlorbenzylperoxid; 2,4-Dichlorbenzylperoxid; 2,2-Bis-(t-butylperoxy)-butan; Di-t-butylperoxid; Benzylperoxid; 2,5-Bis(t-butylperoxy)-2,5-dimethylhexan, Dicumylperoxid; und 2,5-Dimethyl-2,5-di(t-butylperoxy)hexan; und/oder

wobei das Alkoxysilan ausgewählt ist aus Trimethoxymethylsilan, Dimethoxydimethylsilan, Methoxytrimethylsilan, Trimethoxypropylsilan, Trimethoxyoctylsilan, Trimethoxyhexadecylsilan, Dimethoxydipropylsilan, Triethoxymethylsilan, Triethoxypropylsilan, Triethoxyoctylsilan und Diethoxydimethylsilan; und/oder

wobei das Organomercaptoalkoxysilan die allgemeine Formel (II) aufweist:

$$(II) \qquad (X)_n(R^2O)_{3-n}\text{--}Si\text{-}R^3\text{--}SH$$

wobei X ein Radikal ist, ausgewählt aus Chlor, Brom und Alkylradikalen mit 1 bis 16 Kohlenstoffatomen; wobei $R^2$ ein Alkylradikal ist, ausgewählt aus Methylen- und Ethylenradikalen, $R^3$ ein Alkylenradikal mit einem bis 16 Kohlenstoffatomen ist, und n ein Wert von Null bis 3 ist.

7. Verfahren nach mindestens einem der Ansprüche 4 bis 6, wobei besagter Haftvermittler ein Alkoxyorganomercaptosilan ist, ausgewählt aus Triethoxymercaptopropylsilan, Trimethoxymercaptopropylsilan, Methyldimethoxymercaptopropylsilan, Methyldiethoxymercaptopropylsilan, Dimethylmethoxymercaptopropylsilan, Triethoxymercaptoethylsilan und Tripropoxymercaptopropylsilan.

8. Verfahren nach mindestens einem der vorgenannten Ansprüche 4 bis einschließlich 7, wobei die butylkautschukbasierte Dichtungsvorläuferzusammensetzung eine physikalische Eigenschaft von Lagermodul (G'), bei einer dynamischen Belastung von 5 Prozent bei 100°C und 1 Hertz, in einem Bereich von 170 bis 350 kPa aufweist und die depolymerisierte Butylkautschuk-Dichtungszusammensetzung eine physikalische Eigenschaft von Lagermodul (G'), bei einer dynamischen Belastung von 5 Prozent bei 100°C und 1 Hertz, in einem Bereich von 10 bis 100 kPa aufweist.

9. Verfahren nach einem der vorgenannten Ansprüche 4 bis einschließlich 8, wobei die Dichtungszusammensetzung 0,5 bis 5 ThK Kurzfasern enthält, ausgewählt aus Baumwollfasern und aus Kunststofffasern, ausgewählt aus Rayon-, Aramid-, Nylon- und Polyesterfasern, und deren Mischungen.

10. Verfahren nach einem der vorgenannten Ansprüche 4 bis einschließlich 9, wobei die Dichtungsschicht zwischen einer Carbon Black-verstärkten Reifeninnenisolierungs-Kautschukschicht und Reifenkarkasse oder zwischen zwei Reifeninnenisolierungs-Kautschukschichten positioniert ist, und wobei die Dichtungsschicht:

(A) sich von einer Schulter des Reifens zu der anderen durch den Zenitbereich des Reifens erstreckt;
(B) in mindestens einem Reifenschulterbereich positioniert ist und sich in mindestens einen Teil des benachbarten Reifenseitenwandteils des Reifens erstreckt, oder
(C) sich von Seitenwand zu Seitenwand durch den Reifen-Zenitbereich erstreckt.

**Revendications**

1. Bandage pneumatique en caoutchouc possédant une couche intégrée d'étanchéité aux crevaisons non colorée en noir, dans lequel ladite couche d'étanchéité aux crevaisons contient une couche d'étanchéité à base de caoutchouc butyle au moins partiellement dépolymérisé à l'aide d'un organoperoxyde, disposée entre une couche de calandrage intérieur de bandage pneumatique à base de caoutchouc halogénobutyle et une carcasse de bandage pneumatique à base de diène conjugué ou bien entre deux couches de calandrage intérieur en caoutchouc halogénobutyle, et dans lequel ladite couche d'étanchéité aux crevaisons comprend, basé sur des parties en poids par 100 parties en poids dudit caoutchouc butyle partiellement dépolymérisé, à l'exclusion du noir de carbone :

   (A) un caoutchouc butyle partiellement dépolymérisé à l'aide d'un organoperoxyde, sous la forme d'un copolymère d'isobutylène et d'isoprène, dans lequel ledit caoutchouc butyle, avant une telle dépolymérisation, comprend des unités qui dérivent de l'isoprène à concurrence de 0,5 à 5 % en poids et de manière correspondante, des unités qui dérivent de l'isobutylène à concurrence de 95 à 99,5 % en poids ;
   (B) une matière de charge particulaire pour le renforcement, comprenant :

      (1) à concurrence de 20 à 50 phr, de la silice amorphe synthétique ; ou
      (2) à concurrence de 15 à 30 phr, de la silice amorphe synthétique et à concurrence de 5 à 20 phr, de l'argile ; ou
      (3) à concurrence de 15 à 30 phr, de la silice amorphe synthétique et à concurrence de 5 à 20 phr, du carbonate de calcium ; ou
      (4) à concurrence de 15 à 30 phr, de la silice amorphe synthétique, à concurrence de 5 à 15 phr, de l'argile et à concurrence de 5 à 15 phr, du carbonate de calcium ;

   (C) à concurrence de zéro à 6 phr, de courtes fibres organiques ;
   (D) une matière colorante ou une couleur autre que la couleur noire, ladite matière colorante étant choisie parmi au moins un membre du groupe comprenant des pigments organiques, des pigments inorganiques et des colorants ; et
   (E) à concurrence de zéro à 20 phr, de l'huile plastifiante pour le caoutchouc.

2. Bandage pneumatique en caoutchouc selon la revendication 1, dans lequel ladite matière de charge particulaire pour le renforcement comprend :

   (1) à concurrence de 20 à 50 phr, de la silice amorphe synthétique de préférence précipitée possédant une aire de surface BET dans la plage de 50 à 70 $m^2$/g ; ou
   (2) à concurrence de 12 à 30 phr, de la silice amorphe synthétique de préférence précipitée possédant une aire de surface BET dans la plage de 110 à 200 $m^2$/g ; ou
   (3) à concurrence de 15 à 30 phr, de la silice amorphe synthétique de préférence précipitée possédant une aire de surface BET dans la plage de 50 à 70 $m^2$/g, et à concurrence de 5 à 20 phr, de l'argile ; ou
   (4) à concurrence de 5 à 25 phr, de la silice amorphe synthétique de préférence précipitée possédant une aire de surface BET dans la plage de 110 à 200 $m^2$/g, et à concurrence de 5 à 20 phr, de l'argile ; ou
   (5) à concurrence de 15 à 30 phr, de la silice amorphe synthétique de préférence précipitée possédant une aire de surface BET dans la plage de 50 à 70 $m^2$/g, et à concurrence de 5 à 20 phr, du carbonate de calcium ; ou
   (6) à concurrence de 5 à 25 phr, de la silice amorphe synthétique de préférence précipitée possédant une aire de surface BET dans la plage de 110 à 200 $m^2$/g, et à concurrence de 5 à 20 phr, du carbonate de calcium ; ou
   (7) à concurrence de 15 à 30 phr, de la silice amorphe synthétique de préférence précipitée possédant une aire de surface BET dans la plage de 50 à 70 $m^2$/g, à concurrence de 5 à 15 phr, de l'argile et à concurrence de 5 à 15 phr, du carbonate de calcium ; ou
   (8) à concurrence de 5 à 25 phr, de la silice amorphe synthétique de préférence précipitée possédant une aire de surface BET dans la plage de 110 à 200 $m^2$/g, à concurrence de 5 à 15 phr, de l'argile et à concurrence de 5 à 15 phr, du carbonate de calcium.

3. Bandage pneumatique selon la revendication 2, dans lequel ladite silice et le cas échéant ladite argile et ledit carbonate calcium ont été soit traités in situ au sein de la composition de caoutchouc avant l'acquisition de l'organoperoxyde, soit prétraités avant le mélange avec la composition de caoutchouc, avec :

   (A) un polyéthylèneglycol possédant un poids moléculaire moyen en poids dans la plage de 2000 à 15.000 ; ou
   (B) un alcoxysilane ; ou

(C) un agent de couplage choisi parmi le bis (3-triéthoxysilylpropyl) polysulfure ou un organomercaptoalcoxysilane ; ou

(D) une combinaison d'un alcoxysilane, et d'un bis(3-triéthoxysilylpropyl) polysulfure ou d'un organomercaptoalcoxysilane.

4. Procédé de préparation d'un bandage pneumatique possédant une capacité d'étanchéité aux crevaisons, comprenant un assemblage de composants comprenant une bande de roulement circonférentielle externe en caoutchouc vulcanisable au soufre, au moins une nappe de carcasse en caoutchouc supportant ladite bande de roulement et au moins une couche interne de calandrage intérieur de bandage pneumatique à base de caoutchouc halogénobutyle, dans lequel, ledit procédé comprend le fait de :

(A) positionner une couche d'une composition de caoutchouc non vulcanisé à base de caoutchouc butyle, à l'exclusion des adjuvants de vulcanisation au soufre, à titre de précurseur d'une couche d'étanchéité entre ladite couche de calandrage intérieur et la carcasse de caoutchouc ou bien entre deux desdites couches de calandrage intérieur, dans lequel on prépare ladite composition à base de caoutchouc butyle faisant office de précurseur d'étanchéité en mélangeant, basées sur des parties en poids par 100 parties en poids de caoutchouc butyle (phr) :

(1) 100 phr de caoutchouc butyle sous la forme d'un copolymère d'isobutylène et d'isoprène qui contient des unités qui dérivent de l'isoprène à concurrence de 0,5 à 5 % en poids et de manière correspondante, des unités qui dérivent de l'isobutylène à concurrence de 95 à 99,5 % en poids ;

(2) une matière de charge particulière pour le renforcement, comprenant :

(a) à concurrence de 20 à 50 phr, de la silice amorphe synthétique, de préférence précipitée ; ou

(b) à concurrence de 15 à 30 phr, de la silice amorphe synthétique, de préférence précipitée et à concurrence de 5 à 20 phr, de l'argile ; ou

(c) à concurrence de 15 à 30 phr, de la silice amorphe synthétique, de préférence précipitée et à concurrence de 5 à 20 phr, du carbonate de calcium ; ou

(d) à concurrence de 15 à 30 phr, de la silice amorphe synthétique, de préférence précipitée à concurrence de 5 à 15 phr, de l'argile et à concurrence de 5 à 15 phr, du carbonate de calcium ;

(3) à concurrence de zéro à 6 phr, de courtes fibres organiques ;

(4) une matière colorante ou une couleur autre que la couleur noire, ladite matière colorante étant choisie parmi au moins un membre du groupe comprenant des pigments organiques, des pigments inorganiques et des colorants ; et

(5) le cas échéant, un polyéthylèneglycol possédant un poids moléculaire moyen en nombre dans la plage de 2000 à 15.000 ;

(6) à concurrence de zéro à 20 phr, de l'huile plastifiante pour le caoutchouc ; et

(7) un organoperoxyde générant des radicaux libres ;

dans lequel ledit organoperoxyde est mélangé avec ladite composition de caoutchouc à base de caoutchouc butyle après l'addition de ladite silice amorphe synthétique, dudit argile et dudit carbonate de calcium, et le cas échéant dudit polyéthylèneglycol ;

(B) vulcaniser ledit assemblage de bandage pneumatique dans un moule approprié à une température dans la plage de 130 °C à 175 °C pendant un laps de temps suffisant pour dépolymériser partiellement ledit caoutchouc butyle et ainsi obtenir une couche intégrée d'étanchéité.

5. Procédé selon la revendication 4, dans lequel ladite silice et le cas échéant ladite argile et ledit carbonate de calcium ont été soit traités in situ au sein de la composition de caoutchouc avant l'acquisition de l'organoperoxyde, soit prétraités avant le mélange avec la composition de caoutchouc, avec :

(A) un polyéthylèneglycol possédant un poids moléculaire moyen en poids dans la plage de 2000 à 15.000 ; ou

(B) un alcoxysilane ; ou

(C) un agent de couplage choisi parmi le bis(3-triéthoxysilylpropyl) polysulfure ou un organomercaptoalcoxysilane ; ou

(D) une combinaison d'un alcoxysilane, et d'un bis(3-triéthoxysilylpropyl) polysulfure ou d'un organomercaptoalcoxysilane.

**6.** Procédé selon la revendication 4 ou 5, dans lequel ledit caoutchouc butyle dépolymérisé à l'aide d'un organoperoxyde est dépolymérisé avec un organoperoxyde choisi parmi le 4,4-di-(tert-butylperoxy)valérate de n-butyle ; le 2,5-bis (tert-butylperoxy)-2,5-diméthyl-hexane ; le 1,1-di-tert-butylperoxy-3,3,5-triméthyl-cyclohexane ; le 2,5-diméthyl-2,5-di(tert-butylperoxy)hexyne-3 ; le peroxyde de p-chlorobenzyle ; le peroxyde de 2,4-dichlorobenzyle ; le 2,2-bis(tert-butylperoxy)-butane ; le peroxyde de di-tert-butyle ; le peroxyde de benzyle ; le 2,5-bis(tert-butylperoxy)-2,5-diméthyl-hexane ; le peroxyde de dicumyle et le 2,5-diméthyl-2,5-di(tert-butylperoxy)hexane ; et/ou

dans lequel ledit alcoxysilane est choisi parmi le triméthoxy méthyl silane, le diméthoxy diméthyl silane, le méthoxy triméthyl silane, le triméthoxy propyl silane, le triméthoxy octyl silane, le triméthoxy hexadécyl silane, le diméthoxy dipropyl silane, le triéthoxy méthyl silane, le triéthoxy propyl silane, le triéthoxy octyl silane et le diéthoxy diméthyl silane ; et/ou

dans lequel ledit organomercaptoalcoxysilane répond à la formule générale (II) :

$$(II) \qquad (X)_n(R^2O)_{3-n}\text{-Si-}R^3\text{-SH}$$

dans laquelle X représente un radical choisi parmi un radical de chlore, un radical de brome et des radicaux alkyle contenant de 1 à 16 atomes de carbone ; $R^2$ représente un radical choisi parmi un radical méthylène et un radical éthylène ; $R^3$ représente un radical alkylène contenant de 1 à 16 atomes de carbone et n possède une valeur de 0 à 3.

**7.** Procédé selon au moins une des revendications 4 à 6, dans lequel ledit agent de couplage est un alcoxyorganomercaptosilane choisi parmi le triéthoxy mercaptopropyl silane, le triméthoxy mercaptopropyl silane, le méthyl diméthoxy mercaptopropyl silane, le méthyl diéthoxy mercaptopropyl silane, le diméthyl méthoxy mercaptopropyl silane, le triéthoxy mercaptoéthyl silane et le tripropoxy mercaptopropyl silane.

**8.** Procédé selon au moins une des revendications 4 à 7, dans lequel la composition de précurseur de l'agent d'étanchéité à base de caoutchouc butyl possède une propriété physique de module de stockage (G'), à une contrainte dynamique de 5 % à 100 °C et 1 hertz, dans la plage de 170 à 350 kPa, et ladite composition de l'agent d'étanchéité à base de caoutchouc butyle dépolymérisé possède une propriété physique de module de stockage (G'), à une contrainte dynamique de 5 % à 100 °C et 1 hertz, dans la plage de 10 à 100 kPa.

**9.** Procédé selon au moins une des revendications 4 à 8, dans lequel ladite composition d'agent d'étanchéité contient, à concurrence de 0,5 à 5 phr, des courtes fibres choisies parmi des fibres de coton et parmi des fibres synthétiques choisies parmi des fibres de rayonne, des fibres d'aramide, des fibres de nylon et des fibres de polyester, ainsi que leurs mélanges.

**10.** Procédé selon au moins une des revendications 4 à 9, dans lequel ladite couche d'étanchéité est disposée entre une couche de caoutchouc renforcé avec du noir de carbone faisant office de calandrage intérieure pour le bandage pneumatique et la carcasse du bandage pneumatique ou bien entre deux couches de caoutchouc faisant office de calandrages intérieur du bandage pneumatique et, dans lequel ladite couche d'étanchéité :

(A) s'étend d'un épaulement du bandage pneumatique à l'autre en passant par la région de sommet du bandage pneumatique ;
(B) est positionnée dans au moins une région de la zone d'écoulement du bandage pneumatique et s'étend dans au moins une partie de la portion de flanc adjacente du bandage pneumatique ; ou
(C) s'étend d'un flanc à l'autre en passant par la région de sommet du bandage pneumatique.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4895610 A
- US 4228839 A
- US 4171237 A
- US 4140167 A
- US 20030155058 A
- US 6322811 A
- US 4082703 A

### Non-patent literature cited in the description

- **H. A. PALOWSKI et al.** *Rubber World,* June 1992
- *Rubber & Plastics News,* 26 April 1993
- **BRUNAUER ; EMMETT ; TELLER.** *Journal of the American Chemical Society,* 1938, vol. 60, 309